# EUROPEAN PATENT SPECIFICATION

(11) **EP 4 597 732 B1**
(45) Date of publication and mention of the grant of the patent: **25.02.2026**
(21) Application number: 25154936.6
(22) Date of filing: 30.01.2025
(51) Int. Cl.: H01M 50/519, H01M 50/517, H01M 10/48, H01M 50/358, H01M 50/503, H01M 50/507, H01M 50/51

(54) **BUSBAR MODULE**
SAMMELSCHIENENMODUL
MODULE DE BARRE OMNIBUS

(30) Priority: 31.01.2024 JP 2024012634
(43) Date of publication of application: 06.08.2025
(73) Proprietor: Yazaki Corporation, Tokyo 108-0075 (JP)
(72) Inventor: Oga, Tatsuya, Makinohara-shi, Shizuoka, 421-0407 (JP); Nakagawa, Mariko, Makinohara-shi, Shizuoka, 421-0407 (JP); Koike, Hirokuni, Makinohara-shi, Shizuoka, 421-0407 (JP); Aoshima, Yoshiki, Makinohara-shi, Shizuoka, 421-0407 (JP)
(74) Representative: Grünecker Patent- und Rechtsanwälte PartG mbB

(56) References cited:
- EP-A1- 4 089 787
- JP-A- 2013 105 522
- US-A1- 2019 123 334
- US-A1- 2021 251 069
- US-A1- 2023 395 878

## Description

### TECHNICAL FIELD

The present invention relates to a busbar module.

### BACKGROUND

As a conventional busbar module, the busbar module disclosed in JP 2018-142505 A has been proposed. JP 2018-142505 A discloses a conductive module (busbar module) that includes a busbar portion electrically connected to a single cell constituting a battery module, and a flexible substrate electrically connected to the busbar portion.

From document EP 4 089 787 A1 it is known a busbar module including busbars fixed to battery cells of a battery module; a plate-like flexible circuit body; and a case that accommodates the circuit body and the busbars, in which the circuit body includes a trunk portion extending in a first direction in which the battery cells are arranged, and branch portions branching from the trunk portion and connected to the busbars. The branch portion includes a base portion, a fixed portion fixed to the busbar, and an intermediate portion extending from the base portion to the fixed portion in the first direction.

From document US 2019/0123334 A1 it is known a busbar module comprising a case that is assembled to a battery module having a plurality of single cells; a flexible substrate that is held in the case and a busbar portion that is capable of electrically connecting a main body of the flexible substrate and the battery module wherein the main body includes a trunk portion, and a branch portion branched from the trunk portion. The case includes a trunk holding portion that holds the trunk portion, a branch holding portion that is positioned closer to the battery module side than the trunk holding portion and holds the branch portion, and a connecting wall that connects the trunk holding portion and the branch holding portion.

### SUMMARY OF THE INVENTION

As described above, in a busbar module formed by using a flexible substrate, it is preferable to improve the degree of freedom in routing the flexible substrate.

An object of the present invention is to provide a busbar module capable of further improving the degree of freedom in routing a flexible substrate.

A busbar module according to an aspect of the present invention includes the features of claim 1.

The present invention makes it possible to provide a busbar module capable of further improving the degree of freedom in routing a flexible substrate.

### BRIEF DESCRIPTION OF DRAWINGS

FIG. 1 is an exploded perspective view illustrating an example of a power supply device according to an embodiment.

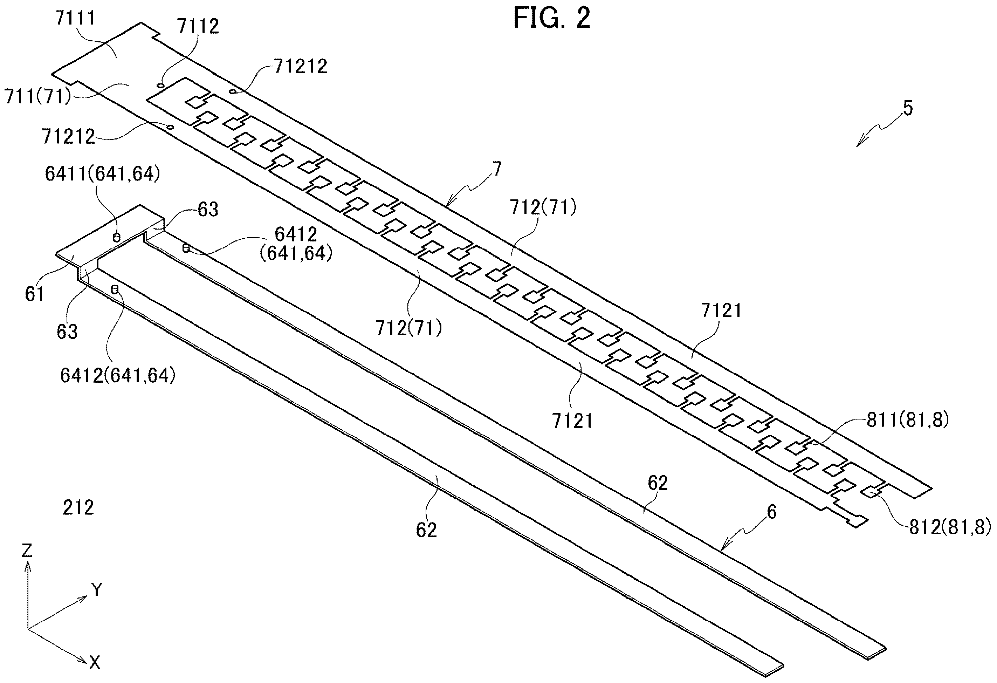

FIG. 2 is an exploded perspective view illustrating an example of a busbar module according to the embodiment.
FIG. 3 is a plan view illustrating an example of a flexible substrate according to the embodiment.
FIG. 4 is a plan view illustrating an example of a case according to the embodiment.
FIG. 5 is a plan view illustrating a state in which the example of the busbar according to the embodiment is connected to an example of a battery module.
FIG. 6 is a partially enlarged perspective view illustrating the example of the power supply device according to the embodiment.
FIG. 7 is a partially enlarged plan view illustrating the example of the power supply device according to the embodiment.
FIG. 8 is a partially enlarged perspective view of an example of a power supply device according to a modified example.
FIG. 9 is a partially enlarged plan view of the example of the power supply device according to the modified example.
FIG. 10 is a partially enlarged plan view of an example of a flexible substrate according to the modified example.

### DETAILED DESCRIPTION OF THE INVENTION

Various embodiments will be described hereinafter with reference to the accompanying drawings.

Hereinafter, a busbar module according to a present embodiment will be described in detail with reference to the drawings. The dimensional ratios in the drawings are exaggerated for the sake of explanation and may differ from the actual ratios.

In the following embodiment, a busbar module that is assembled to a battery module mounted on an electrified vehicle (for example, HV, PHV, EV, FCV) will be exemplified.

In the following description, the direction in which a plurality of single cells are arranged is defined as the X direction (front-rear direction), the direction in which a pair of electrode terminals formed in one single cell are arranged is defined as the Y direction (width direction), and the direction in which the electrode terminals project is defined as the Z direction (up-down direction).

In the power supply device, the up-down direction of each member will be defined in a state in which the busbar module is arranged so as to be positioned above the battery module.

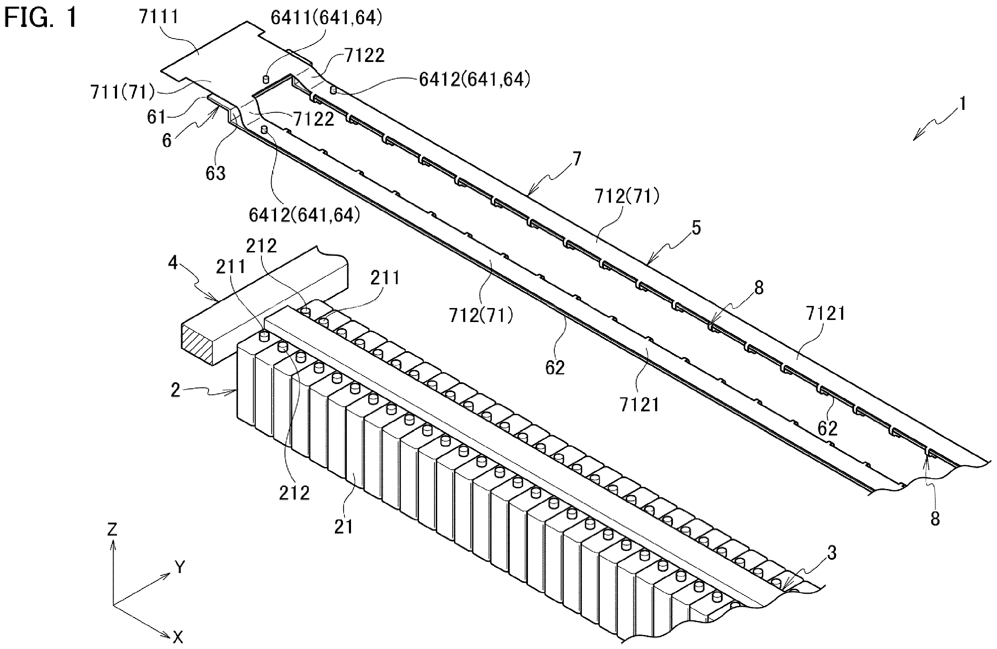

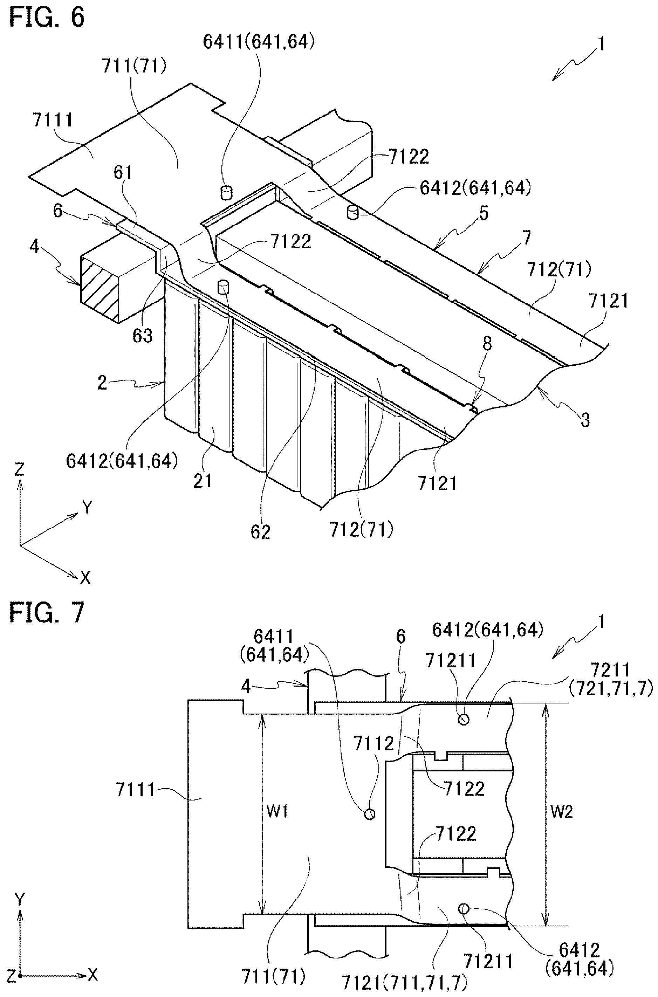

As illustrated in FIGS. 1 and 6, a busbar module 5 according to the present embodiment is assembled to the upper part of a battery module 2, and constitutes a part of a power supply device 1. The power supply device 1 is mounted and used in various electrified vehicles, such as electric vehicles that run using an electric motor and hybrid vehicles that run using an engine and an electric motor in combination, and supplies power to an electric motor.

The busbar module 5 includes a case 6 assembled to the battery module 2, and a flexible substrate 7 held in the case 6. In the present embodiment, a flexible printed circuit (FPC) having a flexible sheet-like main body 71 is used as the flexible substrate 7.

The case 6 may be formed of an insulating material such as synthetic resin, for example, and has a mounting surface with which it is possible to mount the main body 71 of the FPC (flexible substrate) 7 from above in the Z direction (up-down direction) by extending in the horizontal direction.

Meanwhile, as illustrated in FIG. 1, the battery module 2 includes a plurality of single cells 21, and the plurality of single cells 21 are arranged in a row along the X direction (front-rear direction). As such single cells 21, for example, a lithium battery can be used. By arranging the single cells 21 in the X direction (front-rear direction), the battery module 2 has one laminated portion in which the single cells 21 are arranged in one direction (X direction). The battery module 2 may have a plurality of laminated portions.

Further, in the present embodiment, a smoke exhaust duct 3 extending along the direction (X direction) in which the single cells are arranged 21 is mounted on the upper surface between an electrode terminal 211 and an electrode terminal 212 of the respective single cells 21. The smoke exhaust duct 3 is a duct for discharging the gas that is released outside to the outside of the battery module 2 when the gas pressure in the respective single cells 21 exceeds a predetermined value.

As illustrated in FIG. 1, the battery module 2 and the smoke exhaust duct 3 having the above configuration are housed in a housing case 4. The housing case 4 is formed in a substantially box-like shape that opens upward.

Further, in the present embodiment, the busbar module 5 includes a busbar portion 8 that is capable of electrically connecting the main body 71 of the FPC (flexible substrate) 7 and the battery module 2.

**In** the present embodiment, the busbar module 5 includes a plurality of busbar portions 8, and each busbar portion 8 has a flexible busbar 81 with flexibility, and the flexible busbar 81 is integrally formed with the main body 71 of the FPC (flexible substrate) 7. Further, each busbar portion 8 includes a busbar 82 that is electrically connected to the flexible busbar 81 and the single cell 21.

By electrically connecting a plurality of busbars 82 to the single cells 21 of the battery module 2, the plurality of single cells 21 are connected in series or in parallel. **In** the present embodiment, each single cell 21 includes a battery body that is formed into a rectangular parallelepiped shape, and is arranged in such a way that the long sides of the upper surface of the battery body are brought into contact with each other. The electrode terminal 211 and the electrode terminal 212 projecting upward (the side to which the case 6 is assembled) are provided on the upper surface of the battery body. In the electrode terminal 211 and the electrode terminal 212 formed in one single cell 21, one electrode terminal is a positive terminal and the other electrode terminal is a negative terminal.

By connecting the busbar 82 to the electrode terminal 211 and the electrode terminal 212, the busbar 82 is electrically connected to the single cell 21 of the battery module 2.

Specifically, the plurality of single cells 21 are arranged in such a way that the electrode terminals 211 and the electrode terminals 212 serving as positive and negative terminals are alternately arranged along one direction (X direction). That is, the plurality of single cells 21 are arranged in a state in which they are alternately inverted and arranged in one direction (X direction).

The busbar 82 is formed in a plate shape using a conductive material. In the present embodiment, the busbar 82 includes a plurality of connection busbars 821 that connect the adjacent single cells 21, and two pull-out busbars 822 which are connected to one single cell 21 and electrically connected to a power supply or the like (not illustrated).

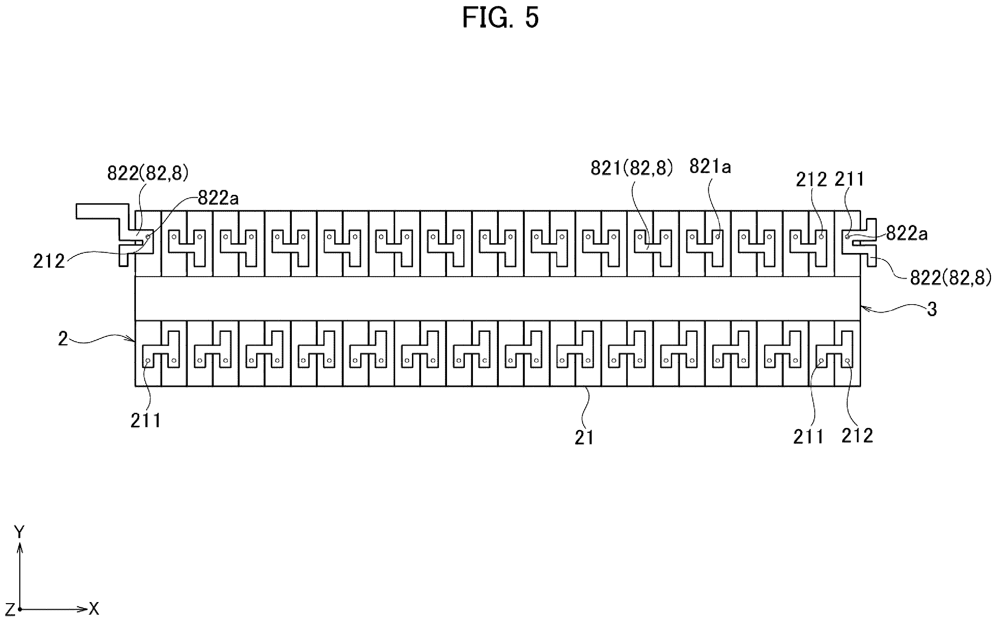

As illustrated in FIG. 5, two insertion holes 821a are formed in each of the connection busbars 821, and the electrode terminal 211 and the electrode terminals 212 of the adjacent single cells 21 are inserted into the two insertion holes 821a of the respective connection busbars 821. The insertion hole 822a is also formed in each of the two pull-out busbars 822. One pull-out busbar 822 is connected to the electrode terminal 211 of the single cell 21 arranged at one end in one direction (X direction), and one pull-out busbar 822 is connected to the electrode terminal 212 of the single cell 21 arranged at the other end in one direction (X direction).

Thus, the plurality of single cells 21 are connected in series by the busbars 82. That is, the plurality of single cells 21 are connected in series by electrically connecting the adjacent single cells 21 with the busbars 82 in a state in which the plurality of single cells 21 having the electrode terminals 211 and the electrode terminals 212 are alternately arranged in a row with opposite polarities. It is also possible to form a set in which the plurality of adjacent single cells 21 (for example, 3 to 5 cells) are arranged in a state in which the terminals are aligned in polarity, and in this case, a plurality of sets can be connected in series.

Further, in the present embodiment, the flexible busbar 81 includes a belt-like branch portion 811 connected continuously to the main body 71, and a connection portion 812 connected continuously to one end of the branch portion 811 and electrically connected to the busbar 82. Electronic components (not illustrated) are mounted on the connection portion 812, and when the connection portion 812 is electrically connected to the single cell 21 via the busbar 82, the electronic components are electrically connected to the single cell 21. Examples of such electronic components include fuses, resistors, capacitors, coils, semiconductors, and the like.

Further, a sensor such as a temperature sensor or a voltage sensor may be interposed between the connection portion 812 and the busbar 82 or between the busbar 82 and the single cell 21, or a sensor chip as an electronic component may be mounted on the connection portion 812. By using such sensors, various functions such as a voltage monitoring function can be provided to the busbar module 5.

**In** the present embodiment, as described above, the smoke exhaust duct 3 is mounted on the upper surface between the electrode terminal 211 and the electrode terminal 212 of the respective single cells, and thus the main body 71 of the FPC (flexible substrate) 7 cannot be routed above the smoke exhaust duct 3. Therefore, in the present embodiment, the main body 71 includes a trunk portion 711 and a pair of branch portions 712 branched from the trunk portion 711.

Further, in the present embodiment, a connector 7111 is mounted on the tip portion of the trunk portion 711 (one end portion in the X direction: the end portion opposite to the side to which the branch portion 712 is connected). The conductor circuit formed in the FPC (flexible substrate) 7 is electrically connected to a device such as an electrical control unit (ECU) via the connector 7111.

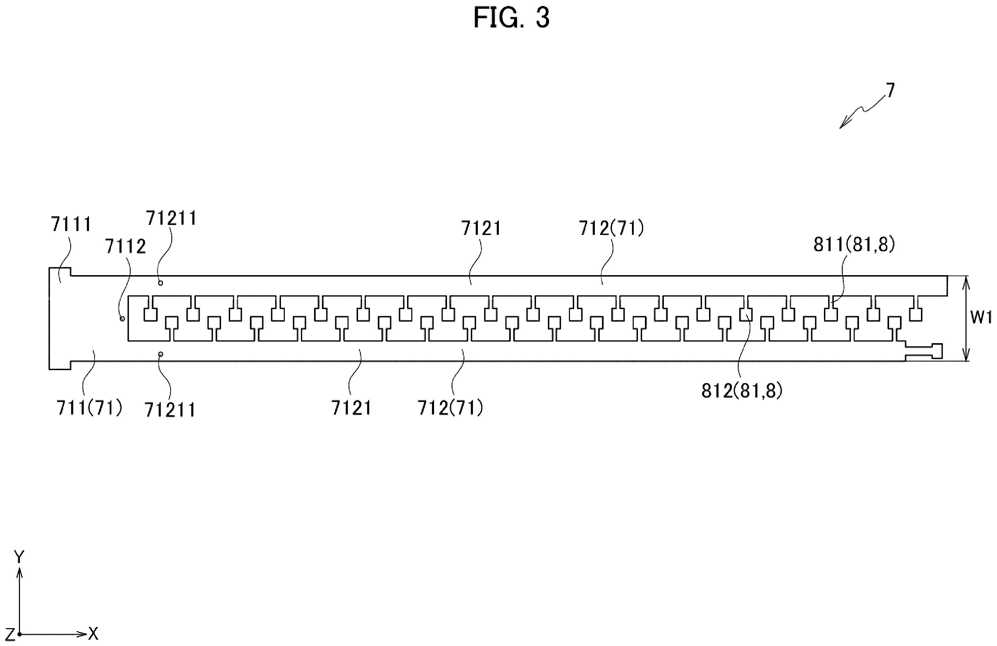

As illustrated in FIG. 3, the pair of branch portions 712 are connected continuously to the other end of the trunk portion 711 in the X direction, and each branch portion 712 is formed in a substantially belt-like shape extending toward the other end in the X direction.

A plurality of flexible busbar portions 81 are formed on the side of each branch portion 712 that faces the branch portion 712 on the opposite side in the Y direction (width direction) so as to project in the Y direction (width direction) toward the branch portion 712 on the opposite side in a state in which the flexible busbar portions 81 are spaced apart in the X direction (front-rear direction). In the present embodiment, a branching portion 811 of the flexible busbar 81 is curved downward, and thus the connection portion 812 of the flexible busbar 81 is electrically connected to the busbar 82.

The FPC (flexible substrate) 7 having such a shape can be acquired by cutting off one base material, for example. In the present embodiment, as illustrated in FIG. 3, when one base material is cut off, a width W1 of the branch portions 712 in the Y direction (width direction) is configured to be equal to the width of the trunk portion 711 in the Y direction (width direction). Further, in the present embodiment, the end portion of the branch portion 712 on one side in the Y direction (width direction) positioned on one side in the Y direction (width direction) is configured to be positioned on the substantially same straight line as the end portion of the trunk portion 711 on one side in the Y direction (width direction). In addition, the end portion of the branch portion 712 on the other side in the Y direction (width direction) positioned on the other side in the Y direction (width direction) is configured to be positioned on the substantially same straight line as the end portion of the trunk portion 711 on the other side in the Y direction (width direction). The width W1 is appropriately set based on, for example, the size of the connector 7111 mounted on the trunk portion 711.

Meanwhile, as illustrated in FIGS. 1 and 6, the case 6 includes a trunk holding portion 61 which is mounted on the housing case 4 when assembled to the battery module 2 and holds the trunk portion 711. Further, the case 6 includes a pair of branch holding portions 62 which are positioned lower than the trunk holding portion 61 in the up-down direction (the battery module 2 side), and are arranged on both sides of the smoke exhaust duct 3 in the Y direction (width direction) when assembled to the battery module 2, and hold the pair of branch portions 712. In the present embodiment, the pair of branch holding portions 62 are arranged upper than the electrode terminals 211 and 212 on both sides of the smoke exhaust duct 3 in the Y direction (width direction) when the case 6 is assembled to the battery module 2. Further, the case 6 includes a pair of connecting walls 63 that extend in the Z direction (up-down direction) to connect the trunk holding portion 61 and the branch holding portions 62. A stepped portion is formed in the case 6 by providing the trunk holding portion 61, the branch holding portions 62, and the connecting walls 63.

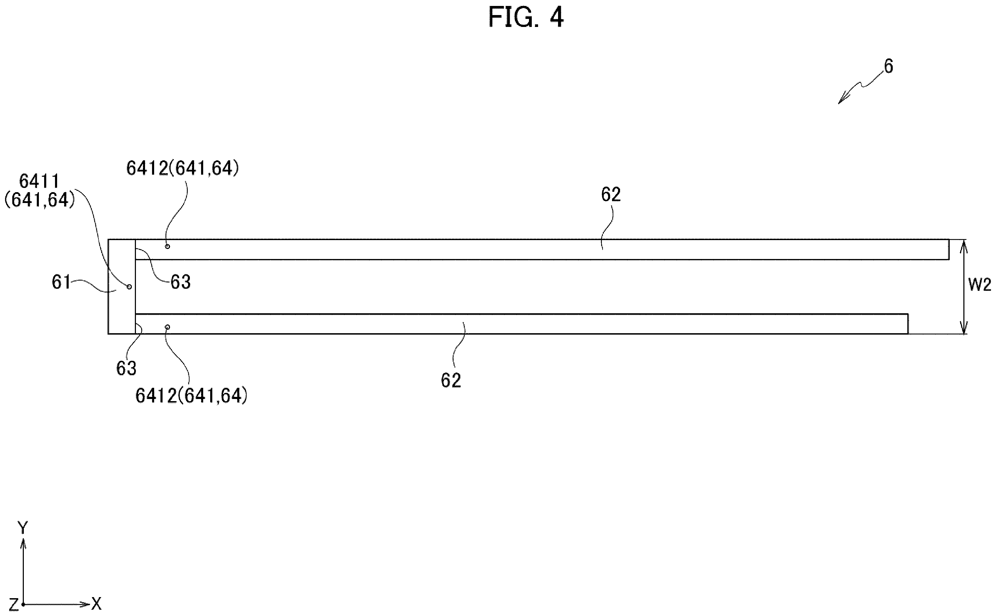

Further, in the present embodiment, as illustrated in FIG. 4, the case 6 is configured in such a way that the pair of branch holding portions 62 have the length of a width W2 in the Y direction (width direction). That is, the length from the end portion of the branch holding portion 62 on one side in the Y direction (width direction) that is positioned on one side in the Y direction (width direction) to the end portion of the branch holding portion 62 on the other side in the Y direction (width direction) that is positioned on the other side in the Y direction (width direction) is set to be the width W2. The width W2 is appropriately set according to the width of the single cell 21 in the Y direction (width direction), the width in the Y direction (width direction) between the electrode terminal 211 and the electrode terminal 212 formed on one single cell 21, the width of the smoke exhaust duct 3 in the Y direction (width direction), or the like.

In the present embodiment, the width W2 is set to be larger than the width W1. That is, the power supply device 1 is configured in such a way that it is not necessary to increase the width of the connector 7111 in the Y direction (width direction) so as to match the width of the single cell 21 and the smoke exhaust duct 3 in the Y direction (width direction).

In this case, in a case where one base material is cut off, if the main body 71 is formed in such a way that the width of the branch portion 712 in the Y direction (width direction) is approximately equal to the width W2 and the branch portion 712 is wider than the trunk portion 711, the main body 71 can be easily held in the case 6. However, if the branch portion 712 is made wider than the trunk portion 711, the amount of material to be discarded after cutting off the portion that becomes the FPC 7 from the base material increases, and thus a plurality of FPCs 7 cannot be efficiently acquired from one base material.

Therefore, in the present embodiment, even when the FPC 7 having the width W1 of the branch portion 712 that matches the width W1 of the trunk portion 711 is used, the amount of material to be discarded after cutting off the portion that becomes the FPC 7 from the base material can be further reduced.

Specifically, a curved portion 7122 is formed in the branch portion 712. In the present embodiment, as illustrated in FIG. 7, the curved portion 7122 is formed so as to be curved in the connecting portion of the branch portion 712 that connects with the trunk portion 711 (on the stepped portion of the case 6) such that the branch portion 712 is positioned outside in the Y direction (width direction) with an increasing distance from the trunk portion 711. A holding portion 64 that holds the main body 71 in a state in which the curved shape of the curved portion 7122 is maintained is formed in the case 6.

Thus, the branch portion 712 can be held by the branch holding portion 62 using the FPC 7 in which the width W1 of the branch portion 712 matches the width W1 of the trunk portion 711.

Further, in the present embodiment, the holding portion 64 is formed by forming a pin 641 in the case 6 that is inserted into the insertion hole formed in the main body 71. Specifically, by inserting a trunk portion side pin 6411 into a trunk portion side insertion hole 7112 and inserting a branch portion side pin 6412 into a branch portion side insertion hole 71211, the curved portion 7122 is formed in the connecting portion of the branch portion 712 that connects with the trunk portion 711 (on the stepped portion of the case 6). The main body 71 is held by the holding portion 64 in a state in which the curved shape of the curved portion 7122 is maintained. At this time, a flat portion 7121, which is a portion connected continuously to the curved portion 7122 in the branch portion 712, is mounted on the branch holding portion 62 of the case 6.

Thus, the main body 71 can be held in the case 6 in a state in which the shape of the curved portion 7122 is maintained only by inserting the trunk portion side pin 6411 and the branch portion side pin 6412 into the trunk portion side insertion hole 7112 and the branch portion side insertion hole 71211 formed in the main body 71, respectively. As a result, the FPC (flexible substrate) 7 can be more easily held in the case 6 in a desired state, thereby further improving the workability of assembling the FPC (flexible substrate) 7 to the case 6.

Further, in the present embodiment, when the main body 71 is held by the pin 641 (holding portion 64), the smooth curved portion 7122 is formed. That is, the main body 71 is held in the case 6 in a state in which the branch 712 is not creased. Therefore, although the crease-like lines are illustrated in each figure to indicate that the curved portion 7122 is formed, the curved portion 7122 is actually formed in a state in which the creases are not present.

This makes it possible to prevent an excessively large force from being applied to the FPC (flexible substrate) 7 compared to the case where the branch 712 is bent in a shape having sharply pointed corners along the boundary line. By preventing such an excessively large force from being applied to the FPC 7, it is possible to more reliably prevent damage to the FPC 7 and deterioration in the performance of the busbar module 5.

As described above, in the busbar module 5 according to the present embodiment, the main body 71 of the FPC (flexible substrate) 7 has the trunk portion 711 and the branch portion 712. The main body 71 of the FPC (flexible substrate) 7 is held in the case 6 in a state in which the curved portion 7122 curving smoothly is formed in the branch portion 712.

Thus, the main body 71 of the FPC (flexible substrate) 7 can be held in the case 6 in a state in which the position of the branch portion 712 relative to the trunk portion 711 is shifted. By appropriately setting the shape of the curved portion 7122, the branch portion 712 can be arranged at various positions.

Accordingly, by setting the shape of the curved portion 7122 according to the positions of the battery module 2 and the busbar portion 8, the branch portion 712 can be routed at a desired position, thereby further improving the degree of freedom in routing the FPC (flexible substrate) 7. Incidentally, as a case where the positions of the battery module 2 and the busbar portion 8 are different, for example, there is a case where the single cell 21 having a different width (length in the Y direction) between the pair of electrode terminals 211 and 212 is used, and there is a case where the extending direction of the busbar 82 connected to the electrode terminals 211 and 212 is different.

By improving the degree of freedom in routing the FPC (flexible substrate) 7, the power supply device 1 having the battery module 2 and the busbar portion 8 at various positions can be handled by using one type of the FPC (flexible substrate) 7. That is, it is possible to handle various types of the power supply device 1 without preparing an FPC (flexible substrate) with a different shape.

In addition, the busbar module 5 described in the present embodiment also makes it possible to adjust the routing position of the FPC (flexible substrate) 7 (the routing position of the branch portion 712). Therefore, even if the positions of the battery module 2 and the busbar portion 8 are deviated due to an assembly error or the like, the FPC (flexible substrate) 7 and the battery module 2 can be electrically connected to each other by the busbar portion 8 more reliably.

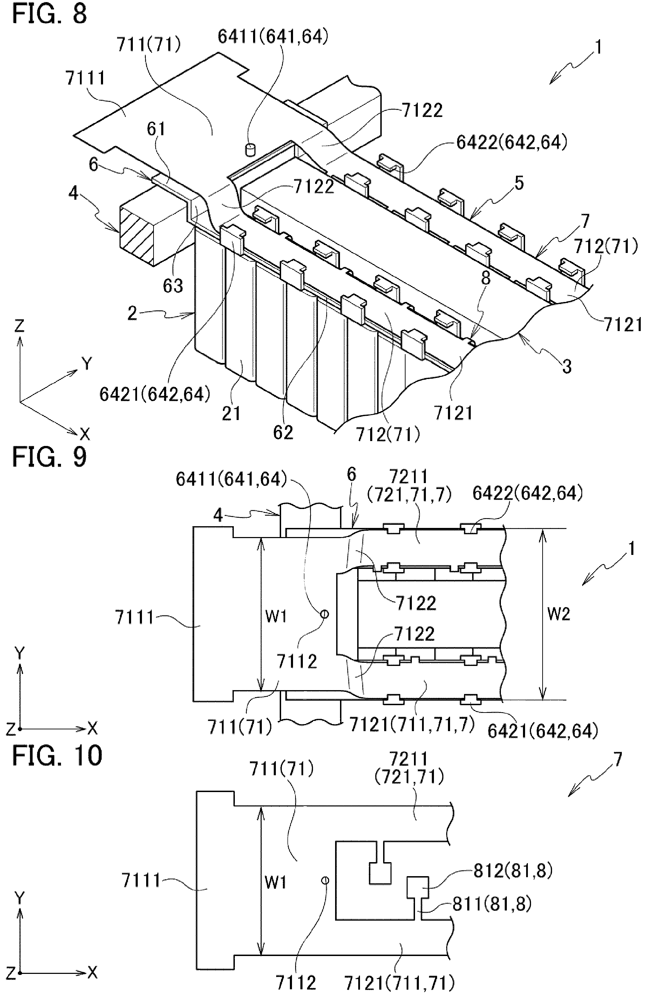

As illustrated in FIGS. 8 and 9, instead of providing the branch portion side pin 6412, a holding projection 642 may be provided on the branch holding portion 62, and the main body 71 may be held in the case 6 in a state in which the curved shape of the smooth curved portion 7122 is maintained by the holding projection 642.

In FIGS. 8 and 9, the plural pairs of holding projections 642 are formed at both ends in the Y direction (width direction) of the respective branch holding portions 62 while being spaced apart in the X direction (front-rear direction). Each of the holding projections 642 includes a pillar portion 6421 extending in the Z direction (up-down direction), and a retaining projection 6422 projecting from the upper end of the pillar portion 6421 to the side where the branch portion 712 is present in the Y direction (width direction). Thus, the branch portion 712 is held by the branch holding portion 62 in such a way as to prevent the branch portion 712 from detaching. Accordingly, as illustrated in FIG. 10, it is not necessary to form the branch portion side insertion hole 71211 in the flat portion 7121 of the branch portion 712, and thus the FPC (flexible substrate) 7 can be formed more easily. Incidentally, it is also possible to form the holding projection on the trunk portion 711. Accordingly, it is not necessary to form the trunk portion side insertion hole 7112 in the trunk portion 711, and thus the FPC (flexible substrate) 7 can be formed far more easily.

### [Function and Effect]

In the following description, the characteristic configuration of the busbar module described in each of the above embodiment and the modification thereof, and the effect obtained therefrom will be described.

The busbar module 5 described in the above embodiment and the modification thereof includes the case 6 that can be assembled to the battery module 2 having the plurality of single cells 21, and the FPC (flexible substrate) 7 that is held in the case 6. The busbar module 5 also includes the busbar portion 8 that is capable of electrically connecting the main body 71 of the FPC (flexible substrate) 7 and the battery module 2.

The main body 71 includes the trunk portion 711, and the branch portion 712 branched from the trunk portion 711. Further, the case 6 includes the trunk holding portion 61 that holds the trunk portion 711, the branch holding portion 62 that is positioned closer to the battery module 2 side (lower side) than the trunk holding portion 61 and holds the branch portion 712, and the connecting wall 63 that connects the trunk holding portion 61 and the branch holding portion 62. The trunk holding portion 61, the branch holding portion 62, and the connecting wall 63 form a stepped portion in the case 6. Further, the branch portion 712 includes the curved portion 7122 that curves smoothly in the connecting portion with the trunk portion 711.

In addition, the holding portion 64 that holds the main body 71 in a state in which the curved shape of the curved portion 7122 is maintained is formed in the case 6.

Thus, in the busbar module 5 described in the above embodiment and the modification thereof, the main body 71 of the FPC (flexible substrate) 7 has the trunk portion 711 and the branch portion 712. The main body 71 of the FPC (flexible substrate) 7 is held in the case 6 having a stepped portion in a state in which the curved portion 7122 curving smoothly is formed in the branch portion 712.

Thus, the main body 71 of the FPC (flexible substrate) 7 can be held in the case 6 in a state in which the position of the branch portion 712 relative to the trunk portion 711 is shifted. By appropriately setting the shape of the curved portion 7122, the branch portion 712 can be arranged at various positions.

Accordingly, by setting the shape of the curved portion 7122 according to the positions of the battery module 2 and the busbar portion 8, the branch portion 712 can be routed at a desired position, thereby further improving the degree of freedom in routing the FPC (flexible substrate) 7. Incidentally, as a case where the positions of the battery module 2 and the busbar portion 8 are different, for example, there is a case where the single cell 21 having a different width (length in the Y direction) between the pair of electrode terminals 211 and 212 is used, and there is a case where the extension direction of the busbar 82 connected to the electrode terminals 211 and 212 is different.

By improving the degree of freedom in routing the FPC (flexible substrate) 7, the power supply device 1 having the battery module 2 and the busbar portion 8 at various positions can be handled by using one type of the FPC (flexible substrate) 7. That is, it is possible to handle various types of the power supply device 1 without preparing an FPC (flexible substrate) with a different shape.

In addition, the busbar module 5 described in the above embodiment and the modification thereof also makes it possible to adjust the routing position of the FPC (flexible substrate) 7 (the routing position of the branch portion 712). Therefore, even if the positions of the battery module 2 and the busbar portion 8 are deviated due to an assembly error or the like, the FPC (flexible substrate) 7 and the battery module 2 can be electrically connected to each other by the busbar portion 8 more reliably.

Further, even when it is necessary to arrange the branch portion 712 in a state of projecting outward in the Y direction (width direction) from the trunk portion 711, the above configuration makes it possible to handle the power supply device 1 by using the FPC (flexible substrate) 7 having the branch portion 712 formed so as to fit within the width of the trunk portion 711. That is, by using the FPC 7 having the branch portion 712 formed in such a way that the position of the end portion in the Y direction (width direction) is the same as the position of the end portion of the trunk portion 711 in the Y direction, the branch portion 712 can be arranged in a state of projecting outward in the Y direction (width direction) from the trunk portion 711.

Therefore, using the above configuration, it is not necessary to form, from the beginning, the branch portion 712 in which the end portion in the Y direction (width direction) is positioned outward from the end portion of the trunk portion 711 in the Y direction. That is, when the FPC (flexible substrate) 7 is formed by cutting off the base material, it is not necessary to cut off the base material such that the branch portion 712 is made wider than the trunk portion 711. As a result, the amount of material to be discarded after cutting off the portion that becomes the FPC (flexible substrate) 7 from the base material can be further reduced, thereby acquiring more FPCs (flexible substrates) 7 from one base material.

Further, in the busbar module 5 described in the above embodiment and the modification thereof, by forming the smooth curved portion 7122, various types of power supply devices 1 can be handled. This makes it possible to prevent an excessively large force from being applied to the FPC (flexible substrate) 7 compared to the case where the branch portion 712 is bent in a shape having sharply pointed corners along the boundary line. Therefore, it is possible to more reliably prevent damage to the FPC (flexible substrate) 7 and deterioration in the performance of the busbar module 5.

Further, the holding portion 64 may be a pin (trunk portion side pin 6411 and branch portion side pin 6412) inserted into the insertion hole (trunk portion side insertion hole 7112 and branch portion side insertion hole 71211) formed in the main body 71.

Thus, the main body 71 can be held in the case 6 in a state in which the shape of the curved portion 7122 is maintained only by inserting the trunk portion side pin 6411 and the branch portion side pin 6412 into the trunk portion side insertion hole 7112 and the branch portion side insertion hole 71211 formed in the main body 71, respectively. As a result, the FPC (flexible substrate) 7 can be more easily held in the case 6 in a desired state, thereby further improving the workability of assembling the FPC (flexible substrate) 7 to the case 6.

### [Others]

Although the present embodiment has been described as above, the present embodiment is not limited to these configurations and various modifications are possible within the scope of the present embodiment.

For example, the configurations, which are described in the above embodiment and the modification thereof, may be combined as appropriate.

The above embodiment and the modification thereof exemplify the case 6 in which the trunk holding portion 61 and the branch holding portion 62 are connected by the connecting wall 63 extending in the Z direction (up-down direction). However, the configuration of the case 6 is not limited to such a configuration, and various configurations may be possible. For example, the connecting wall 63 may be an inclined wall, or may be a wall portion having a curved surface that curves along the curved portion 7122.

Further, the above embodiment and the modification thereof exemplify the case 6 in which the branch portion 712 needs to be arranged so as to be wider than the trunk portion 711. However, the configuration of the case 6 is not limited to such a configuration, and various configurations may be possible. For example, the case 6 in which the branch portion 712 is arranged so as to have a width narrower than that of the trunk portion 711 may be possible, or the case 6 in which the branch portion 712 is arranged so as to have a width equal to that of the trunk portion 711 may be possible.

In addition, the specifications (shape, size, layout, etc.) of the case and the busbar portion, and of other particulars may also be changed as appropriate.

## Claims

1. A busbar module (5), comprising:
a case (6) that is assembled to a battery module (2) having a plurality of single cells (21);
a flexible substrate (7) that is held in the case (6); and
a busbar portion (8) that is capable of electrically connecting a main body (71) of the flexible substrate (7) and the battery module (2), wherein
the main body (71) includes a trunk portion (711), and a pair of branch portions (712) branched from the trunk portion (711),
the case (6) includes a trunk holding portion (61) that holds the trunk portion (711), a pair of branch holding portions (62) that are positioned closer to the battery module (2) side than the trunk holding portion (61) and holds the pair of branch portions (712), and connecting walls (63) that connect the trunk holding portion (61) and the pair of branch holding portions (62), in which the trunk holding portion (61), the pair of branch holding portions (62), and the connecting walls (63) form two stepped portions,
the pair of branch portions (712) include curved portions (7122) that curve smoothly in a connecting portion with the trunk portion (711), and
a holding portion (64) that holds the main body (71) in a state in which a curved shape of the curved portions (7122) are maintained is formed in the case (6).

2. The busbar module (5) according to claim 1, wherein
the holding portion (64) is a pin (6411,6412) inserted into an insertion hole (7112,71211) formed in the main body (71).

## Patentansprüche

1. Ein Sammelschienenmodul (5), aufweisend:
eine Gehäuse (6), das mit einem Batteriemodul (2) mit einer Vielzahl von einzelnen Zellen (21) zusammengebaut ist;
ein flexibles Substrat (7), das in dem Gehäuse (6) gehalten wird; und
einen Sammelschienen-Abschnitt (8), der in der Lage ist, einen Hauptkörper (71) des flexiblen Substrats (7) und das Batteriemodul (2) elektrisch zu verbinden, wobei
der Hauptkörper (71) einen Stammabschnitt (711) und ein Paar von Abzweigabschnitten (712) aufweist, die von dem Stammabschnitt (711) abzweigen,
das Gehäuse (6) einen Stamm-Halteabschnitt (61) aufweist, der den Stammabschnitt (711) hält, ein Paar von Abzweig-Halteabschnitten (62), die näher an der Seite des Batteriemoduls (2) angeordnet sind als der Stamm-Halteabschnitt (61) und das Paar von Abzweigabschnitten (712) halten, und Verbindungswände (63), die den Stamm-Halteabschnitt (61) und das Paar von Abzweig-Halteabschnitten (62) verbinden, wobei der Stamm-Halteabschnitt (61), das Paar von Abzweig-Halteabschnitten (62) und die Verbindungswände (63) zwei gestufte Abschnitte bilden,
das Paar von Abzweigabschnitten (712) gekrümmte Abschnitte (7122) aufweist, die sich in einem Verbindungsabschnitt mit dem Hauptabschnitt (711) sanft krümmen, und
ein Halteabschnitt (64), der den Hauptkörper (71) in einem Zustand hält, in dem eine gekrümmte Form der gekrümmten Abschnitte (7122) beibehalten wird, in dem Gehäuse (6) ausgebildet ist.

2. Das Sammelschienenmodul (5) nach Anspruch 1, wobei
der Halteabschnitt (64) ein Stift (6411, 6412) ist, der in ein Einsetzloch (7112, 71211) eingesetzt ist, das in dem Hauptkörper (71) ausgebildet ist.

## Revendications

1. Module de barre omnibus (5), comprenant :
un boîtier (6) qui est assemblé à un module de batterie (2) ayant une pluralité de cellules uniques (21) ;
un substrat flexible (7) qui est maintenu dans le boîtier (6) ; et
une partie barre omnibus (8) qui est capable de connecter électriquement un corps principal (71) du substrat flexible (7) et le module de batterie (2), dans lequel
le corps principal (71) comprend une partie tronc (711), et une paire de parties ramifications (712) ramifiées à partir de la partie tronc (711),
le boîtier (6) comporte une partie de maintien de tronc (61) qui maintient la partie tronc (711), une paire de parties de maintien de ramification (62) qui est positionnée plus près du côté module de batterie (2) que la partie de maintien de tronc (61) et qui maintient la paire de parties ramifications (712), et des parois de connexion (63) qui connectent la partie de maintien de tronc (61) et la paire de parties de maintien de ramification (62), la partie de maintien de tronc (61), la paire de parties de maintien de ramification (62), et les parois de connexion (63) formant deux parties étagées,
la paire de parties ramifications (712) comporte des parties courbées (7122) qui se courbent en douceur dans une partie de connexion avec la partie tronc (711), et
une partie de maintien (64), qui maintient le corps principal (71) dans un état dans lequel une forme courbée des parties courbées (7122) est conservée, est formée dans le boîtier (6).

2. Module de barre omnibus (5) selon la revendication 1, dans lequel
la partie de maintien (64) est une goupille (6411, 6412) insérée dans un trou d'insertion (7112, 71211) formé dans le corps principal (71).
